# EUROPEAN PATENT APPLICATION

(11) **EP 4 292 800 A1**
(43) Date of publication of application: **20.12.2023**
(21) Application number: 23178761.5
(22) Date of filing: 12.06.2023
(51) Int. Cl.: B29D 30/06, B29C 33/60

(54) **MOLDING PROCESS FOR EASED RELEASE OF A TIRE**

(30) Priority: 16.06.2022 US 202217807151
(71) Applicant: The Goodyear Tire & Rubber Company, Akron, OH 44316 (US)
(72) Inventor: LABAR, Michael Ghislain, B-6820 Florenville (BE); PIERRE, Christophe Jean Alexis Ghislain, B-6790 Aubange (BE)
(74) Representative: Kutsch, Bernd

(57) **Abstract**

A molding process is disclosed wherein a green tire is formed and then molded within a tire mold (1). The tire mold (1) has one or more moveable elements (27) configured to move at least into an open configuration and a closed configuration of the tire mold (1). The tire mold (1) comprises a mold cavity (5). The process comprises the steps of: providing a tire mold (1); placing the green tire within the mold cavity (5); closing the tire mold (1); curing the tire; injecting one or more gases in the mold cavity (5); and opening the tire mold (1) to retrieve the molded tire.

## Description

### Field of the Invention

The invention pertains to molding processes to produce pneumatic and/or non-pneumatic tires with eased release of the molded tires after curing. The invention also relates to tire molds suitable for such molding processes.

### Background of the Invention

It is known to have an uncured tire (also called "green tire") placed into a tire mold to shape its surface with a specific tread design and cure it. The tire mold is closed and the tire is cured at elevated temperature, wherein gas or air left between the tire mold and the tire can leave through small venting passages/channels in the tire mold as otherwise bubbles would form on the tire surface. As a result of processes including such venting passages in the tire mold, so-called spews remain and protrude from the tire surface. Ventless tire molding has been developed, among other reasons, to improve the visual appearance of the tires. In vacuum technology, a vacuum is applied to the tire mold before curing the tire with the idea that the air is removed before curing such that venting can be reduced to a minimum.

For example, EP 2 881 230 A describes such a tire mold and process. In particular, this document describes a system for providing a vacuum in a segmented tire mold, the system comprising a vacuum container and a segmented tire mold. The vacuum container seals the tire mold to make it airtight. The tire mold has an upper sidewall assembly and a lower sidewall assembly, a plurality of radially moveable tread mold segments operable with the upper sidewall assembly and the lower sidewall assembly to define a tire mold cavity in the closed configuration of the tire mold, a conical actuating ring assembly surrounding the tread mold segments for providing a radial movement of the tread mold segments into engagement with the upper sidewall assembly and the lower sidewall assembly. The vacuum container comprises top-sealing means between the actuating ring assembly and the upper sidewall assembly, and bottom sealing means between the actuating ring assembly and the lower sidewall assembly, such that the tire mold is airtight and ready for evacuation or evacuated only when fully closed. The top sealing means and the bottom sealing means comprise silicone. The tire mold and the vacuum container have no sliding seals.

Irrespective of technology employed, it is known to use a mold release agent to avoid stocked or blocked tires in the press when the press opens. It would be advantageous to find solutions to avoid or at least reduce the need for mold release agents.

### Summary of the Invention

The invention relates to a process in accordance with claim 1.

Dependent claims refer to preferred embodiments of the invention.

One or more of the above needs can be fulfilled by the molding process, the use and the tire mold according to the present invention, wherein one or more gases, such as air, are injected in a tire mold (i.e., in the molding cavity of the tire mold), preferably a ventless tire mold or an airtight tire mold, at the end of the curing step. The one or more injected gases remove the suction effect between the tire itself and mold segments or sidewall plates. This releases or at least eases the release of the molded tire and avoids any tire scrap or, in some cases, mold segment defects. When the tire mold is a ventless tire mold or an airtight tire mold, the one or more channels used for the vacuum pump to remove the air inside the mold cavity when the tire mold is closing can be used to inject gas (such as air) before or during the opening of the tire mold and by this way, resulting costs and time are low to implement the molding process.

According to a first preferred aspect, the invention is directed to a molding process wherein a green tire is formed and then molded within a tire mold; the tire mold having one or more moving elements configured to move at least in (or into) an open configuration and a closed configuration of the tire mold; the tire mold comprising a mold cavity; wherein the process comprises steps of:
- providing a tire mold;
- placing the green tire within the mold cavity;
- closing the tire mold;
- curing the tire;
- injecting one or more gases in the mold cavity; and
- opening the tire mold to retrieve the molded tire.

According to a second preferred aspect, the invention is directed to a molding process wherein a green tire is formed and then molded within a tire mold; the tire mold having one or more moving elements configured to move at least in (or into) an open configuration and a closed configuration of the tire mold; the tire mold comprising a mold cavity; wherein the process comprises steps of:
- providing a tire mold being airtight and having one or more closing seal members; optionally, the tire mold is also ventless;
- placing the green tire within the mold cavity;
- closing and sealing the tire mold and drawing a vacuum on the mold cavity;
- curing the tire;
- injecting one or more gases in the mold cavity; and
- opening the tire mold to retrieve the molded tire.

According to a third preferred aspect, the invention is directed to a molding process wherein a green tire is formed and then molded within a tire mold; the tire mold having one or more moving elements configured to move at least in (or into) an open configuration and a closed configuration of the tire mold; wherein the process comprises steps of:
- providing a ventless tire mold or an airtight tire mold;
- placing the green tire within the mold cavity;
- closing and sealing the tire mold and drawing a vacuum on the mold cavity;
- curing the tire;
- injecting air in the mold cavity; and
- opening the tire mold to retrieve the molded tire.

According to a fourth preferred aspect, the invention is directed to the use of a vacuum channel for injecting pressurized gas in a mold cavity of a ventless tire mold or an airtight tire mold to retrieve a molded tire (i.e., a cured tire) from said mold cavity. Said vacuum channel is connected to a vacuum pump to remove the air inside the mold cavity of a ventless tire mold or an airtight tire mold, and the ventless tire mold preferably comprises one or more closing seal members. As the ventless tire mold comprises one or more closing seal members, it is also airtight.

The use of pressured liquids during the molding of a tire is known from DE 101 54 825 A. However, in such a case, the liquid used is a vulcanization liquid that is used for vulcanization. This is different from the invention in that the one or more gases have a release function and/or are involved in the process after the cure of the tire.

It is understood herein that the step of injecting one or more gases (such as air) in the mold cavity is performed after the step of curing the tire. So that in the process according to the first, the second, or the third aspect, the steps are performed in the order listed.

The following can be used to further define the molding process according to the first aspect, the second aspect, the third aspect or the use according to the fourth aspect.

The molding processes can use conventional tire molds or ventless tire molds or airtight tire molds. In preferred embodiments, the molding process uses a tire mold that is preferably a ventless tire mold or an airtight tire mold. In the embodiments in which the tire mold is a ventless tire mold, the tire mold provided preferably has one or more seal members and the step of closing the tire mold comprises sealing the tire mold and drawing a vacuum on the mold cavity. In such a configuration the ventless tire mold is also airtight.

In embodiments wherein the tire mold is a ventless tire mold that is airtight or an airtight tire mold, the step of injecting gas is preferably performed or at least started while the tire mold is still sealed. In other words, the step of injecting gas is performed or at least started during the step of opening of the tire mold while the tire mold is still airtight.

For example, the process comprises drawing a vacuum on the mold cavity before the curing step using one or more channels and wherein the step of injecting gas is performed using at least one channel used to draw the vacuum.

For example, both steps of drawing a vacuum in the mold cavity and injecting air in the mold cavity are performed using the same channels. With preference, the tire mold comprises a bottom plate wherein at least one channel is arranged in the bottom plate.

In all embodiments (i.e., in embodiments using conventional or ventless tire molds or airtight tire molds), in the step of injecting gas, the pressure in the tire mold is preferably at most 2.1 MPa or at most 1.0 MPa or at most 0.7 MPa.

For example, the step of injecting one or more gases is conducted to create a pressure inside the mold cavity greater than the atmospheric pressure or of at least 0.2 MPa.

For example, in the step of injecting one or more gases, the pressure in the molding cavity of the tire mold is ranging from 0.12 to 2.1 MPa or from 0.2 to 0.7 MPa.

In a preferred embodiment, the tire mold comprises an actuating ring, a top plate/element, a bottom plate/element, upper and lower side members, and a plurality of mold segments and slide blocks; the upper and lower side members and the plurality of mold segments defining a mold cavity, and the gas is injected using one or more channels in the tire mold, wherein at least one channel of the one or more channels is placed in the bottom plate/element or in the actuating ring or in the top plate/element.

In a preferred embodiment, the tire mold comprises a molding surface coated with a fluorocarbon polymer or a CrNi alloy or a fluorinated diamond-like carbon (F-DLC) material.

In a preferred embodiment, the tire mold comprises a molding surface with a low-adhesion coating layer, with preference, the low-adhesion coating layer is made of or comprises polytetrafluoroethylene.

In a preferred embodiment, the tire mold is configured for molding all-season or winter tires so that the molding surface comprises a plurality of sipes.

In a preferred embodiment, in the step of injecting one or more gases, the gas is air so that the step of injecting one or more gases is a step of injecting air. With preference, the step of injecting air comprises filtering the air before it is injected.

In a preferred embodiment, the step of injecting one or more gases is performed for at least 1 second and/or at most 20 minutes.

According to a fifth preferred aspect, the invention is directed to an installation comprising a tire mold suitable for the implementation of the molding process according to any one of the aforementioned aspects, wherein the installation comprises a tire mold comprising a mold cavity, and one or more channels arranged to inject gas in the mold cavity. The installation further comprises at least one injection pump and/or at least one reserve/reservoir of compressed gas or any combination thereof which is arranged to inject gas in the tire mold when connected to the one or more channels.

In a preferred embodiment, the installation comprises a filtration unit suitable for filtering the gas, such as air, before it is injected into the mold cavity.

The tire mold can be a conventional tire mold or a ventless tire mold or an airtight tire mold. In preferred embodiments, the tire mold is airtight.

For example, the tire mold comprises one or more (moveable) elements configured to move at least in (or into) an open configuration and a closed configuration of the tire mold and the tire mold is a ventless tire mold or an airtight tire mold and further has one or more seal members configured for bringing the tire mold into an airtight configuration when said moving elements are in the closed configuration.

For example, the tire mold is a ventless tire mold or an airtight tire mold and has one or more channels to evacuate air from the mold cavity when a vacuum is drawn and the installation further comprises a vacuum pump arranged to draw a vacuum in the mold cavity when connected to the tire mold.

For example, the vacuum pump and the injection pump are arranged to be connected to the same channel of the tire mold. With preference, the vacuum pump and the injection pump are different pumps.

For example, the vacuum pump and the reservoir of compressed gas are arranged to be connected to the same channel of the tire mold.

In a preferred embodiment, the tire mold comprises an actuating ring, a top element/plate, a bottom element/plate, upper and lower side members, and a plurality of mold segments and slide blocks. The upper and lower side members and the plurality of mold segments define the mold cavity and the vacuum pump and/or at least one of the injection pump or the reservoir of compressed gas are connected to at least one channel arranged in the bottom element or in the actuating ring or in the top element; with preference in the bottom element.

In a preferred embodiment, the tire mold comprises a molding surface coated with a fluorocarbon polymer or a CrNi alloy or a floored (or fluorinated) diamond-like carbon (F-DLC) material.

In a preferred embodiment, the tire mold comprises a molding surface with a low-adhesion coating layer, with preference, the low-adhesion coating layer is made of or comprises polytetrafluoroethylene.

In a preferred embodiment, the molding surface comprises a plurality of sipes suitable for molding an all-season tire or a winter tire.

In a preferred embodiment, the step of injecting one or more gases is performed for at least 1 second or at least 10 seconds, and at most 20 minutes or at most 5 minutes.

In a preferred embodiment, the step of injecting one or more gases is performed for at least 30 seconds and at most 5 minutes.

In a preferred embodiment, at least one channel is in fluid (flow) communication with a switch valve (not illustrated), said switch valve being connected to a vacuum pump and to an injection pump (such as a gas compressor) and/or to a reservoir of compressed gas (such as compressed air), and wherein the switch valve is optionally configured for selectively connecting the mold cavity to the vacuum pump or to the injection pump or the reservoir of compressed gas.

### Definitions

For the invention, the following definitions are given.

The terms "comprising", "comprises" and "comprised of' as used herein are synonymous with "including", "includes", "containing" or "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g. 1 to 5 includes 1, 2, 3, 4 and 5 when referring to, for example, a number of elements, and can also include 1.5, 2, 2.75 and 3.80, when referring to, for example, measurements). The recitation of endpoints also includes the recited endpoint values themselves (e.g. from 1.0 to 5.0 includes both 1.0 and 5.0). Any numerical range recited herein is intended to include all sub-ranges subsumed therein.

The reference throughout this specification to "one embodiment" or "an embodiment" means that a particular feature, structure or characteristic described in connection with the embodiment is included in at least one embodiment of the present invention. The features, structures, characteristics or embodiments may be combined in any suitable manner, as would be apparent to a person skilled in the art from this invention, in one or more embodiments. Furthermore, while some embodiments described herein include some but not other features included in other embodiments, combinations of features of different embodiments are meant to be within the scope of the invention and form different embodiments, as would be understood by those in the art.

Unless otherwise defined, all terms used in the invention, including technical and scientific terms, have the meaning as commonly understood by one skilled in the art to which this invention belongs. By means of further guidance, definitions for the terms used in the description are included to better appreciate the teaching of the present invention.
"Sipes" means small slots molded into the tread elements that subdivide the tread surface and improve traction.
"Green tire" means a tire in an uncured state, i.e., before a step of vulcanization.
"Bead" relates to the part of the tire comprising an annular tensile member wrapped by ply cords and shaped, with or without other reinforcement elements such as flippers, chippers, apexes, toe guards and chafers, to fit the design rim.
"Sidewall" or "sidewall portion" relates to the portion of a tire between the tread and the bead.
"Tread" relates to the portion of the tire that encounters the road under normal inflation and load.

### Brief Description of the Drawings

The invention will be described by way of example and with reference to the accompanying drawings in which:
FIG. 1 is a partial cross-sectional view of a tire mold according to an embodiment of the invention; and
FIG. 2 is a view of connecting means to connect the vacuum and/or injection pump or the reservoir of compressed gas to the bottom plate of a tire mold.

### Detailed Description of Preferred Embodiments of the Invention

The following is an explanation of a process and a tire mold according to embodiments of the present invention for molding a pneumatic or a non-pneumatic tire.

The molding process and the tire mold in accordance with embodiments of the invention are remarkable in that they provide a device to inject a gas such as air in the mold cavity after curing of a tire to ease the release of the tire from the tire mold.

In the molding process, a green tire, having tread, sidewall and bead portions, is formed and then molded within a tire mold. The tire mold has one or more moving elements configured to move at least into an open configuration and a closed configuration of the tire mold comprising an actuating ring, a top plate, a bottom plate, upper and lower side members, and a plurality of mold segments and slide blocks. The upper and lower side members and the plurality of mold segments define a mold cavity wherein the process comprises the steps of:
- providing a tire mold;
- placing the green tire within the mold cavity;
- curing the tire;
- injecting one or more gases in the mold cavity; and
- opening the tire mold to retrieve the molded tire.

The tire mold can be a conventional tire mold or a ventless tire mold or an airtight tire mold. In a preferred embodiment, the tire mold is airtight.

In such a case in which a green tire having tread, sidewall and bead portions is formed and then molded within a tire mold, the tire mold has one or more moving elements configured to move at least into an open configuration and a closed configuration of the tire mold, wherein the tire mold comprises an actuating ring, a top plate, a bottom plate, upper and lower side members, a plurality of mold segments and slide blocks, as well as a vacuum device. The upper and lower side members and the plurality of mold segments define a mold cavity and the tire mold further comprises means for sealing the mold cavity which includes one or more closing seal members, and wherein the process comprises:
- providing a tire mold having one or more closing seal members;
- placing the green tire within the mold cavity;
- closing the tire mold and drawing a vacuum on the mold cavity;
- curing the tire;
- injecting one or more gases in the mold cavity; and
- opening the tire mold to retrieve the molded tire.

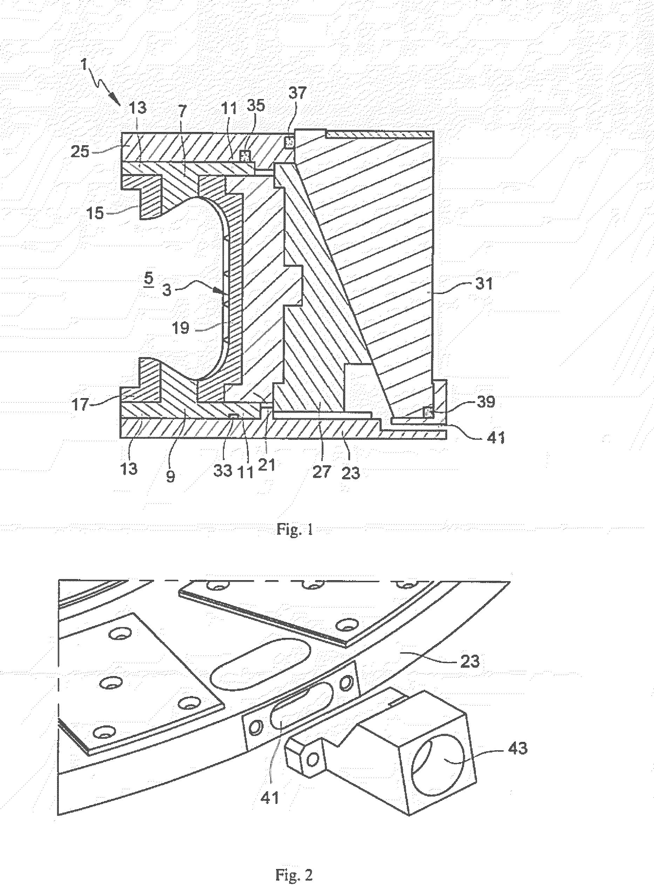

Reference is made to FIG. 1 which illustrates a first embodiment of a tire mold 1. The tire mold 1 comprises a plurality of mold segments which are arranged to form an annular ring when assembled. The outer tread surface of a tire is formed by the inner molding surface 3 of the mold segments which corresponds to the external surface tread molding element. The inner molding surface has a plurality of sipes and/or blades (not shown) to mold the tread pattern in a green tire (not represented). The mold segments may be radially movable to allow assembly and disassembly of the tire mold about a green tire and a molded tire respectively.

The tire mold 1 further comprises first and second sidewall plates 7, 9 for molding the sidewalls of the tire. Each sidewall plate 7, 9 joins with the mold segments to form a smooth continuous surface from the tire tread to the sidewall. Each sidewall plate 7, 9 may comprise an optional radially outer lip 11 forming an essentially L-shaped recess for receiving a first and second flanged end of the mold segment therein. Each sidewall plate 7, 9 further comprises an optional radially inner extension or lip 13 forming a second L-shaped recess for receiving a mold bead ring 15, 17 therein. Each bead ring 15, 17 has a radiused portion for receiving a bead area of a green tire thereon. The upper and lower sidewall plates 7, 9 together with the plurality of tread segments and the top and bottom bead rings 15, 17 cooperate to define a mold cavity 5 for molding a green tire.

The mold segment can comprise a tread molding element 19 and a support element 21 or comprises a tread molding element integral with the support element or comprises a tread molding element integral with the support element and with a slide block.

The mold segment can be formed from one or two elements. In the embodiment of FIG. 1, the mold segments are formed from two elements being a tread molding element 19 and a support element 21. However, in another embodiment, the tread molding element and the support element are integral and form a single element being the mold segment.

Preferably, irrespective of whether the mold segment is formed from one or two elements, the tire mold 1 is angularly segmented and further comprises a container housing.

The container housing typically includes top and bottom plates 23, 25. The bottom plate 23 has an inner annulus for supporting the sidewall plate 9 and the bead ring 17. Surrounding the segments are a plurality of slide blocks 27. The slide blocks 27 have flanged ends for receiving and supporting the segments therein. The slide blocks 27 have a top and a bottom surface for contacting the top and bottom plates 23, 25 and optional wear plates (not shown). Slide blocks 27 are slidable in a radial direction. The container housing further comprises an annular actuating ring 31. The inner radial surface of the actuating ring 31 is angled for engagement with an outer angled surface of the slide blocks 27. In the embodiment shown in FIG. 1, the actuating ring 31 is one of the one or more moving elements configured to move at least in an open configuration and a closed configuration of the tire mold. However, the person skilled in the art may adapt the invention to a tire mold configuration wherein the actuating ring is not movable. Such configuration is known to the person skilled in the art and described in US 7,056,109.

When the actuating ring 31 is one of the one or more moving elements, as the actuating ring 31 is lowered from an opened configuration to a closed configuration, the inner radial surface of the actuating ring 31 engages the outer angled surface of slide blocks 27, causing the slide blocks to slide radially inward. The camming action of the actuating ring 31 moves the slide blocks 27 radially inward due to a wedge effect. As slide blocks 27 move radially inward, the radially inner surface of the slide blocks 27 engages the outer surface of the adjacent mold segment, moving the mold segment radially inward as the actuating ring 31 is lowered into its closed configuration that defines the diameter-reducing limit position, causing the blades and/or the sipes to cut the surface of the green tire.

The tire mold 1 can be airtight and/or ventless. Preferably the tire mold is airtight.

In embodiments wherein the tire mold 1 is a ventless tire mold that is airtight or an airtight tire mold, it further comprises a plurality of seal members 33, 35. A bottom seal member 33 is placed between the contact surface of the bottom plate 23 and the second sidewall plate 9. Similarly, a top seal member 35 is placed between the contact surface of the top plate 25 and the first sidewall plate 7.

The tire mold 1 further comprises closing seal members 37, 39 arranged to seal the mold cavity 5 slightly before the tire mold 1 is closed, for example, before the actuating ring 31 reaches its closed configuration or position. For example, an upper closing seal member 37 is arranged on a groove of the top plate 25 and cooperates with the actuating ring 31 to form a structure impervious to air. Similarly, a bottom seal member 39 is arranged on the bottom plate 23 to cooperate with the actuating ring 31 to form a structure impervious to air. Therefore, when coupled with the upper closing seal member 37 and the lower closing seal member 39, the actuating ring 31 provide an air barrier for drawing a vacuum in the tire mold cavity 5.

For example, the upper closing seal member 37 and the lower closing seal member 39 are of an O-ring type, as illustrated in FIG. 1. However, in some embodiments, at least one of the closing seal members 37, 39 can be of a T-(shaped)-type. In the embodiment illustrated in FIG. 1, both the upper and the lower closing seal members 37, 39 are O-ring seal members. However, the invention encompasses also embodiments in which both the upper and the lower closing seal members are T-seal members, or embodiments in which the upper closing seal member is an O-ring seal member and/or the lower closing seal member is a T-seal member. Alternatively, the upper closing seal member is a T-seal member and the lower closing seal member is an O-ring seal member.

In preferred embodiments, the upper closing seal member 37 and the lower closing seal member 39 are of the O-ring type since they will still be airtight when gas is injected into the mold cavity.

The tire mold 1 may initially be partly closed and already airtight in the "not yet fully closed" configuration. This allows to efficiently remove air between the surface of the green tire and the inner molding surface 3 and to avoid the formation of bubbles. The air may be evacuated and, while pumping the air present in the mold cavity 5, the tire mold 1 is fully closed.

It is understood that in embodiments in which the tire mold 1 is a ventless tire mold that is airtight or wherein the tire mold 1 is an airtight tire mold, the tire mold 1 is associated with one or more vacuum pumps (not shown). Air is evacuated from the airtight tire mold 1 (and therefore from the mold cavity 5) through one or more channels 41. The embodiment illustrated in FIGS. 1 and 2 shows such a channel 41 arranged in the bottom plate 23. However, the person skilled in the art may consider other locations for the one or more channels in addition or alternatively to the channel present in the bottom plate 23. For example, one or more channels can be arranged in the actuating ring 31 and/or in the top plate 25. On FIG. 2, a plug 43 is fixed to the mouth of a channel 41 arranged in a bottom plate 23 to bring the molding cavity in fluid (flow) communication alternatively with a vacuum pump and an injection pump (not shown) or alternatively with a vacuum pump and reservoir of compressed gas (not shown).

After the tire mold 1 is closed, the vacuum pump may be disconnected, for example, during the cure of the tire. It is understood that during the cure, the tire mold is preferably sealed.

The process is remarkable as after curing the tire and before opening the tire mold to retrieve a molded tire (i.e., a cured tire), it comprises a step of injecting one or more gases in the mold cavity. The one or more gases are or comprise preferably air. The injected gas will infiltrate between the molded tire and the inner molding surface to assist the release of the tire from the mold segments and the sidewall plates. Injecting gas in the mold cavity before the opening of the tire mold or during the (very) beginning of opening the tire mold will remove the suction cup effect between the tire itself and mold segments or sidewall plates. The injection of gas in the mold cavity has the further advantage that it will release or at least ease the release of the tire and avoid any tire scrap or, in some cases, mold segment defect.

It is understood that the one or more gases are injected in a different place than from where a curing bladder (when present) inflates. A curing bladder is a cylindrical bag that is typically mounted in a lower section of the tire curing press and forms a part of the press and mold assembly. The "green" tire is positioned over the bladder in the bottom half of the mold. When the mold is closed, pressurized steam, air, hot water, or inert gas (nitrogen) is introduced into the bladder to provide internal heat and pressure for the tire shaping and curing process. It is understood that gases used in connection with inflating curing bladders are injected before the curing step and/or in another place. According to the invention, the one or more gases are injected after the curing step and/or between the molded tire and the inner molding surface so as to separate those.

For example, the one or more gases injected are or comprise air, so that in the step of injecting gas, the gas is air. With preference, the step of injecting air comprises filtering the air before it is injected.

In case the tire mold is a conventional tire mold, the quantity of gas injected needs to be important to generate pressure inside the mold cavity. Thus, in a preferred embodiment, the tire mold is a ventless tire mold that is airtight or wherein the tire mold is an airtight tire mold and the step of injecting gas is performed or at least started while the tire mold is still sealed so that it is easier to generate a pressure inside the tire mold. Injection of gas in the mold cavity generates a pressure in the mold cavity that is above the atmospheric pressure.

The pressure generated by the injection of one or more gases is greater than the atmospheric pressure but should not be so important that it may damage the tire. For example, for the step of injecting gas, the pressure in the tire mold is at most 2.1 MPa, preferably at most 1.8 MPa, or even more preferably at most 1.5 MPa, at most 1.0 MPa, at most 0.9 MPa, at most 0.7 MPa, at most 0.6 MPa, or at most 0.5 MPa.

For example, for the step of injecting gas, the pressure in the tire mold is ranging from 0.12 to 2.1 MPa, preferably from 0.13 to 1.8 MPa from 0.14to 1.5 MPa, from 0.15 to 1.0 MPa, from 0.18 to 0.9 MPa, from 0.2 to 0.7 MPa, from 0.25 to 0.6 MPa, or from 0.3 to 0.5 MPa.

For example, the step of injecting one or more gases is conducted to create a pressure inside the mold cavity greater than the atmospheric pressure or of at least 0.2 MPa.

For example, the step of injecting gas is performed for at least 1 second and at most 20 minutes, preferably for at least 2 seconds and at most 10 minutes, more preferably for at least 5 seconds and at most 5 minutes, and even more preferably for at least 10 seconds and at most 1 minute.

For example, the step of injecting gas is performed for at most 20 minutes, preferably at most 10 minutes, more preferably at most 5 minutes, even more preferably at most 1 minute.

For example, the step of injecting gas is performed for at least 1 second, preferably at least 2 seconds, more preferably for at least 5 seconds, even more preferably at least 10 seconds.

The one or more gases are injected using an injection pump (such as a gas compressor) and/or a reservoir of compressed gas and can be injected in the mold cavity by any suitable means. The tire mold comprises therefore one or more channels that can be used for gas injection. The one or more channels for gas injection are the same or different from the one or more channels used for drawing a vacuum. In a preferred embodiment, the step of injecting gas is performed using at least one channel also used to draw the vacuum in the mold cavity.

In an embodiment, at least one channel 41 is in fluid (flow) communication with a switch valve. Said switch valve is connected to a vacuum pump and to an injection pump (such as a gas compressor) and/or to a reservoir of compressed gas (such as compressed air), the switch valve being configured for selectively connecting the mold cavity to the vacuum pump or to the injection pump or the reservoir of compressed gas. A reservoir of compressed gas could for instance be a gas tank or gas container.

Whether they are the same or different, the one or more gases may be injected using one or more channels in the tire mold, wherein at least one channel of the one or more channels is provided in the bottom element or in the actuating ring or in the top element.

To facilitate the release of the tire by air injection, the inner mold surface 3 is preferably covered by a coating layer that promotes low adhesion of the molded tire on the inner mold surface 3. Such coating layers as such are well known to the person skilled in the art and are described for example in EP 2 012 991 A, CN 108239767 A and CN 108193173 A.

For example, the coating layer comprises a fluorocarbon polymer (such as polytetrafluoroethylene (PTFE)) or a CrNi alloy or a fluorinated diamond-like carbon (F-DLC) material. With preference, the coating layer is made of or comprises polytetrafluoroethylene (PTFE).

The present process can be used for molding any type of tire but is particularly useful for molding all-seasons tires or winter tires so that the molding surface comprises a plurality of sipes.

## Claims

1. A molding process wherein a green tire is formed and then molded within a tire mold (1), the tire mold (1) having one or more moveable elements (27) configured to move at least into an open configuration and a closed configuration of the tire mold (1), and the tire mold (1) comprising a mold cavity (5), wherein the process comprises the steps of:
- providing a tire mold (1);
- placing the green tire within the mold cavity (5);
- closing the tire mold (1);
- curing the tire;
- injecting one or more gases in the mold cavity (5); and
- opening the tire mold (1) to retrieve the molded tire.

2. The process of claim 1 wherein the tire mold (1) is airtight when closed, and wherein the tire mold (1) has one or more closing seal members (37, 39) and/or is ventless.

3. The process of claim 1 or 2 wherein the closing of the tire mold (1) comprises or is followed by sealing the tire mold (1) and drawing a vacuum on the mold cavity (5).

4. The process according to at least one of the previous claims wherein the tire mold (1) is airtight and has one or more seal members (37, 39), and wherein the step of closing the tire mold (1) comprises sealing the tire mold (1) and drawing a vacuum on the mold cavity (5).

5. The process according to at least one of the previous claims wherein the step of injecting one or more gases is performed or at least started while the tire mold (1) is still sealed.

6. The process according to at least one of the previous claims wherein in the step of injecting one or more gases, the pressure in the tire mold is at most 2.1 MPa or at most 1.0 MPa or at most 0.7 MPa or is ranging from 0.12 to 2.1 MPa or from 0.2 to 0.7 MPa.

7. The process according to at least one of the previous claims, comprising drawing a vacuum on the mold cavity (5) before the curing step using one or more channels (41) and wherein the step of injecting one or more gases is performed using at least one channel (41) used to draw the vacuum.

8. The process according to at least one of the previous claims wherein the tire mold (1) comprises an actuating ring (31), a top plate (25), a bottom plate (23), upper and lower side members (7, 9), and a plurality of mold segments (19) and slide blocks (27); the upper and lower side members (7, 9) and the plurality of mold segments (19) defining the mold cavity (5), and wherein the one or more gases are injected using one or more channels (41) in the tire mold (1), wherein at least one channel (41) of the one or more channels is placed in the bottom plate (23) or in the actuating ring (31) or in the top plate (25).

9. The process according to at least one of the previous claims wherein the tire mold (1) comprises a molding surface coated with one or more of a fluorocarbon polymer, a CrNi alloy, a fluorinated diamond-like carbon material, or a molding surface coated a relatively low-adhesion coating layer made of or comprising polytetrafluoroethylene.

10. The process according to at least one of the previous claims wherein in the step of injecting one or more gases, the gas is air so that the step is a step of injecting air.

11. The process according to at least one of the previous claims wherein the step of injecting the one or more gases or the air comprises filtering the one or more gases or the air before injecting.

12. The process according to at least one of the previous claims wherein the step of injecting one or more gases is performed or at least started during the step of opening the tire mold (1) while the tire mold (10) is still airtight.

13. The process according to at least one of the previous claims wherein the step of injecting one or more gases is conducted to create a pressure inside the mold cavity (5) greater than the atmospheric pressure or of at least 0.2 MPa.

14. The process according to at least one of the previous claims wherein the step of drawing a vacuum in the mold cavity (5) and the step of injecting one or more gases or air in the mold cavity (5) are performed using the one or more channels (43).

15. The process according to at least one of the previous claims wherein the tire mold (1) comprises a bottom plate (23) and wherein at least one channel (41) is arranged in the bottom plate (23).
